## Europäisches Patentamt
## European Patent Office
## Office européen des brevets

(19)

(11) Numéro de publication: **0 216 720**
**B1**

(12)

# FASCICULE DE BREVET EUROPEEN

(45) Date de publication du fascicule du brevet:
**25.04.90**

(51) Int. Cl.⁴: **H04J 3/06**

(21) Numéro de dépôt: **86460015.0**

(22) Date de dépôt: **19.08.86**

(54) Système d'assemblage et de sérialisation temporels bit à bit de multiplex de paquets.

(30) Priorité: **30.08.85 FR 8513040**

(43) Date de publication de la demande:
**01.04.87 Bulletin 87/14**

(45) Mention de la délivrance du brevet:
**25.04.90 Bulletin 90/17**

(84) Etats contractants désignés:
**DE GB IT NL SE**

(56) Documents cités:
**EP-A- 0 040 351**
**EP-A- 0 108 028**
**US-A- 3 546 384**

(73) Titulaire: **Servel, Michel, Le Rhu en Servel,**
**F-22300 Lannion(FR)**
Titulaire: **Thomas, Alain, 25 rue Balendrot,**
**F-44000 Nantes(FR)**

(72) Inventeur: **Servel, Michel, Le Rhu en Servel,**
**F-22300 Lannion(FR)**
Inventeur: **Thomas, Alain, 25 rue Balendrot,**
**F-44000 Nantes(FR)**

(74) Mandataire: **Le Guen, Louis François, CABINET Louis LE**
**GUEN 38, rue Levavasseur B.P. 91, F-35802 Dinard**
**Cédex(FR)**

## Description

La présente invention concerne un système d'assemblage et de sérialisation temporels de multiplex de paquets en un multiplex d'ordre supérieur et vice-versa.

Dans les systèmes connus d'assemblage temporel de multiplex d'ordre inférieur en multiplex d'ordre supérieur, que l'assemblage soit effectué bit par bit ou caractère par caractère, on ajouter couramment aux données provenant des multiplex d'ordre inférieur des données de verrouillage de supertrame. A la réception, la reconnaissance des données de verrouillage de supertrame permet la sérialisation correcte du multiplex d'ordre supérieur. En pratique, les données de verrouillage de supertrame occupent du temps et réduisent le débit utile que peut transmettre le canal d'ordre supérieur. Le rapport numérique entre l'horloge du multiplex d'ordre supérieur et celle des multiplex d'ordre inférieur n'est pas égal au nombre de ces derniers, ce qui peut compliquer certaines opérations.

Dans le document US-A 3 546 384, il est décrit un système de multiplexage bit à bit de quatre multiplex MIC primaires, dans lequel on marque un des multiplex primaires en inversant son mot de synchronisation de trame primaire et dans lequel, côté réception, le fonctionnement du compteur de démultiplexage est inhibé tant que le mot de synchronisation inversé et les mots de synchronisation non inversés ne sont pas reconnus en bonne place. Après une inhibition, le compteur de démultiplexage n'est remis en marche qu'une fois les détections en bonne place des mots de synchronisation.

Par ailleurs, dans le document EP-A 0 108 028, on a décrit un système de synchronisation d'un système de transmission numérique à multiplex découpé en intervalles de temps égaux et récurrents dans lequel l'information à transmettre est découpée en paquets. Chaque paquet occupe un intervalle de temps et comprend une étiquette de longueur fixe devant le champ de données. Dans chaque intervalle de temps non occupé par un paquet, on transmet un signal de synchronisation d'intervalle de temps qui a la longueur d'une étiquette de paquet, mais qui n'est pas utilisable comme étiquette de paquet, le reste de l'intervalle de temps non occupé étant rempli par une suite quelconque de signaux. En pratique, le reste d'un intervalle de temps non occupé est une suite de bits prédéterminée.

Dans un tel multiplex, les intervalles de temps non occupés, donc les signaux de synchronisation, surviennent d'une manière aléatoire. Dans un multiplex d'ordre supérieur de tels multiplex primaires, il n'est donc pas possible d'utiliser les enseignements du documents US-A 3 546 384.

Un objet de la présente invention consiste à prévoir un système d'assemblage et de sérialisation bit par bit de multiplex d'ordre inférieur tels que celui qui est décrit ci-dessus et à intervalles de temps synchrones, sans nécessiter l'addition de données pour assurer le verrouillage de supertrame dans le multiplex d'ordre supérieur et où la synchronisation du démultiplexage correct peut reprendre au moins après un temps maximal prédéterminé.

Cet objet est atteint par la mise en œuvre de combinaisons de moyens définis dans les revendications complétant la présente description.

L'invention apparaîtra plus clairement à la lecture de la description suivante d'un exemple de réalisation, ladite description étant faite en relation avec les dessins joints, parmi lesquels:

la Fig. 1 est un schéma-bloc d'un système d'assemblage et de sérialisation de multiplex synchrones du type de celui décrit dans le document EP-A 0 108 028, dans lequel on n'utilise pas le procédé de l'invention,

la Fig. 2 est un schéma-bloc d'un système d'assemblage et de sérialisation utilisant l'invention,

la Fig. 3 est un bloc-diagramme du circuit d'aiguillage utilisé dans le système de la Fig. 2, et

la Fig. 4 est le schéma d'un détecteur utilisé dans le système de la Fig. 3.

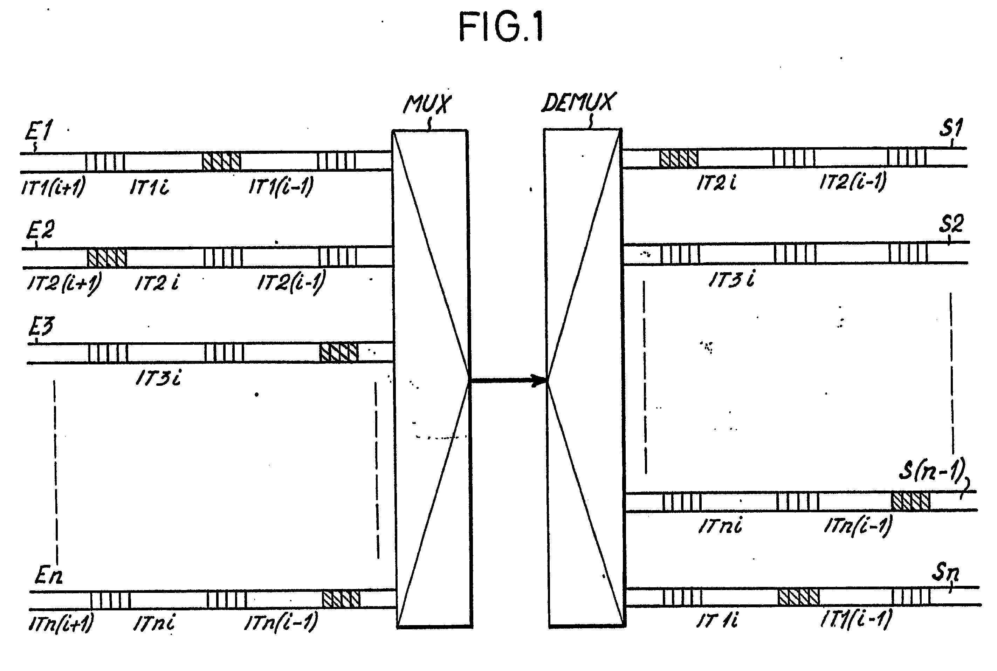

Dans le système de la Fig. 1, on a représenté $\underline{n}$ canaux d'entrée E1 à En portant chacun un multiplex de paquets suivant le document EP-A 0 108 028. Sur le canal E1, on a figuré trois intervalles de temps IT1(i–1), IT1i et IT1(i+1), où l'intervalle de temps IT1i est non occupé tandis que les deux autres sont respectivement occupés par des paquets. Pour le canal d'entrée E2, on a montré trois intervalles de temps IT2(i-1), IT2i et IT2(i+1), où IT2(i+1) est un intervalle non occupé. Les intervalles de temps correspondants du canal d'entrée E3 sont tous occupés par des paquets. Pour le canal d'entrée En, c'est l'intervalle de temps ITn(i-1) qui est non occupé.

En pratique, à la Fig. 1, les intervalles de temps non occupés se distinguent par une étiquette hachurée tandis que les étiquettes des intervalles de temps occupés par des paquets ne sont pas hachurées.

Enfin, les multiplex des canaux d'entrée E1 à En sont synchrones, c'est-à-dire que leurs intervalles de temps sont synchrones. On rappelle que la mise en synchronisme de tels multiplex peut être réalisée en utilisant le "circuit d'alignement de blocs d'informations numériques de longueur fixe" qui est décrit dans le document EP-A-O 113 307.

Dans le schéma de la Fig. 1, les canaux d'entrée E1 à En sont reliés aux $\underline{n}$ entrées d'un multiplexeur bit par bit MUX dont la sortie est reliée à l'entrée d'un démultiplexeur bit par bit DEMUX. Le démultiplexeur DEMUX a $\underline{n}$ sorties qui sont reliées à $\underline{n}$ canaux de sortie S1 à Sn.

Il apparaîtra à l'homme de métier que, sans précaution particulière, les paquets du canal d'entrée E1 peuvent se retrouver sur un canal de sortie quelconque, par exemple Sn comme montré à la Fig. 1, et que l'ensemble des multiplex d'entrée subit, à partir de là, une permutation circulaire. Bien entendu, le multiplexage suivi du démultiplexage devrait normalement conduire à retrouver les paquets d'un canal d'entrée Ei sur un canal de sortie prédéterminé, soit plus généralement Si.

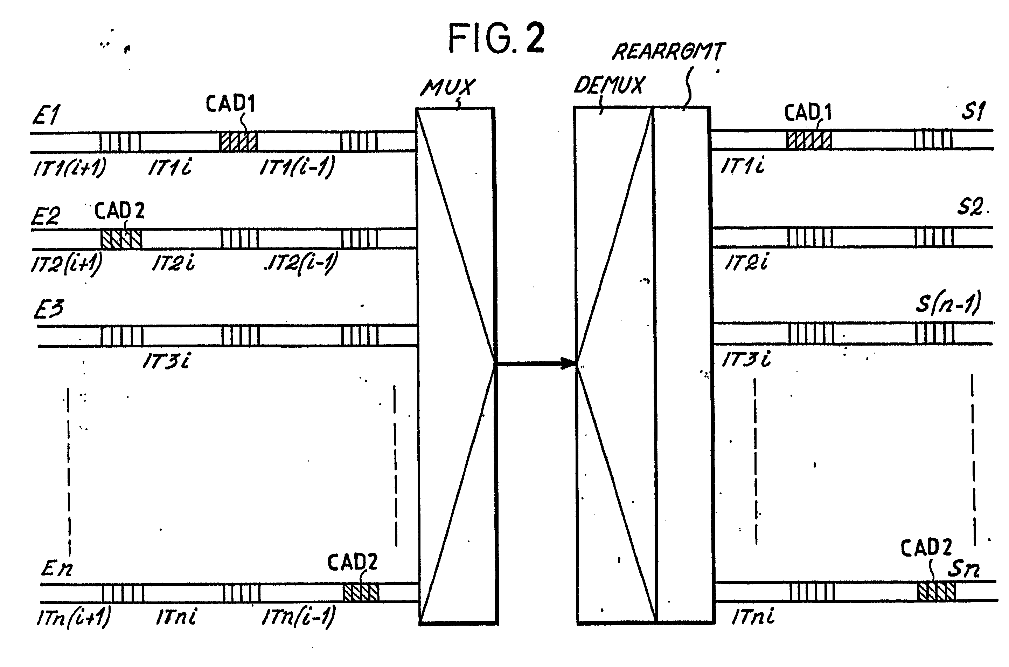

Dans le système de la Fig. 2, on retrouve les canaux d'entrée E1 à En, le multiplexeur MUX, le démultiplexeur DEMUX, les canaux de sortie S1 à Sn, et, en plus, un circuit de réarrangement REARRGMT, qui est associé au démultiplexeur DEMUX pour assurer que les paquets du canal d'entrée Ei sortent bien sur le canal Si.

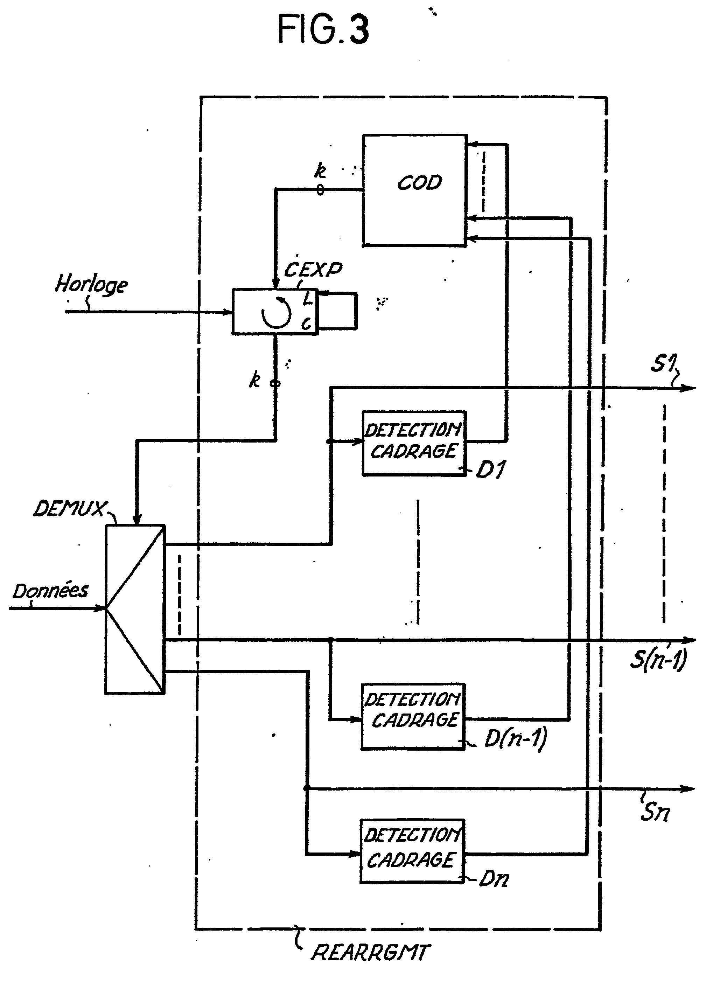

Par ailleurs, on peut noter que l'étiquette d'intervalle non occupé CAD1 du canal E1 est différente des étiquettes des intervalles non occupés CAD2 des autres canaux d'entrée, la différence étant, à la Fig. 2, indiquée par des hachures de directions différentes. En relation avec le bloc-diagramme de la Fig. 3, on va voir comment cette différence d'étiquette est exploitée dans le circuit de réarrangement REARRGMT.

Le circuit REARRGMT de la Fig. 3 comprend, respectivement montés en parallèle sur les canaux de sortie S1 a Sn, des circuits détecteurs de cadrage D1 à Dn dont les sorties de commande sont respectivement reliées aux n entrées d'un circuit de codage COD. La sortie à k fils du circuit de codage COD est reliée à l'entrée de chargement parallèle d'un compteur CEXP dont l'entrée d'horloge reçoit un signal d'horloge au rythme des bits de la liaison entre les circuits MUX et DEMUX et dont la sortie à k fils est reliée à l'entrée de commande du démultiplexeur DEMUX. La sortie "carry" C du compteur CEXP est reliée à son entrée L d'activation de chargement.

En pratique, un circuit détecteur de cadrage Dj, avec j compris entre 1 et n, est constitué d'une manière semblable au circuit de synchronisation montré à la Fig. 2 du document EP-A-O 108 028, mais est prévu pour détecter les deux étiquettes CAD1 et CAD2 en donnant de plus une information sur l'identité de l'étiquette détectée.

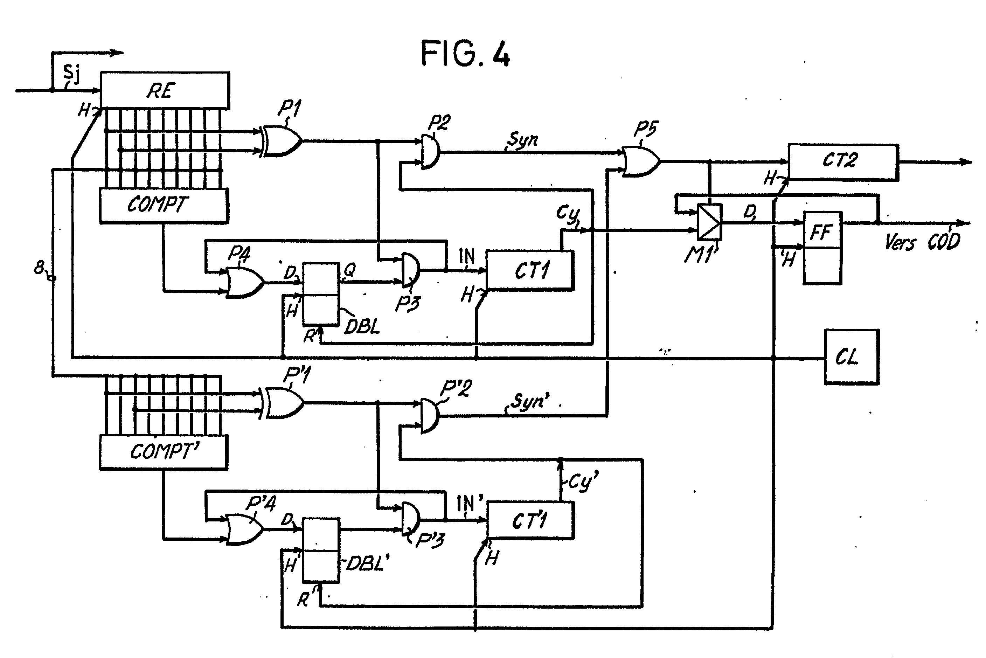

La Fig. 4 montre le schéma d'un tel circuit détecteur. Un registre à décalage RE a son entrée série reliée au canal de sortie Sj et une entrée d'horloge H reliée à un circuit d'horloge CL restituant le rythme bit du canal. En supposant que l'étiquette comprend huit bits, le registre RE a huit étages. Ses huit sorties binaires sont, d'une part, reliées aux huit premières entrées parallèles d'un comparateur COMPT et, d'autre part, aux huit premières entrées parallèles d'un comparateur COMPT'. Aux secondes entrées, non montrées, du comparateur COMPT sont appliqués des potentiels correspondant à l'étiquette CAD1, soit des potentiels correspondant au "0" binaire. Aux secondes entrées, non montrées, du comparateur COMPT' sont appliqués des potentiels correspondant à l'étiquette CAD2, par exemple quatre potentiels correspondant au "1" binaire et quatre potentiels correspondant au "0" binaire.

On va supposer que, dans la suite, les intervalles de temps ont tous une longueur de 128 bits, les intervalles non occupés du canal d'entrée E1 comportent une étiquette CAD1 formée de huit "0", suivie d'une suite alternée de "1" et de "0", et les intervalles non occupés des autre canaux une étiquette CAD2 de structure "11110000", suivie d'une suite alternée de "11" et "00". Les sorties parallèles de rangs "1" et "2" du registre RE sont reliées aux entrées d'une porte OU-exclusif P1 tandis que ses sorties de rangs "1" et "3" sont reliées aux entrées d'une porte OU-exclusif P'1. La sortie de la porte P1 est reliée aux premières entrées de deux portes ET P2 et P3. La sortie de la porte P'1 est reliée aux premières entrées de deux portes ET P'2 et P'3.

La sortie du comparateur COMPT est reliée à une entrée d'une porte OU P4 dont la second entrée est reliée à la sortie de la porte P3 et dont la sortie est reliée à l'entrée D d'une bascule DBL. La bascule DBL est du type D et a son entrée d'horloge H reliée au circuit d'horloge CL, sa sortie Q reliée à la seconde entrée de la porte P3 et son entrée R de remise à zéro reliée à la sortie Cy d'un compteur CT1.

La sortie du comparateur COMPT' est reliée à une entrée d'une porte OU P'4 dont la seconde entrée est reliée à la sortie de la porte P'3 et dont la sortie est reliée à l'entrée D d'une bascule DBL'. La bascule DBL' est du type D et a son entrée d'horloge H reliée au circuit d'horloge CL, sa sortie Q reliée à la seconde entrée de la porte P'3 et son entrée de remise à zéro R reliée à la sortie Cy' d'un compteur CT'1.

Le compteur CT1 est un compteur binaire à sept bits dont l'entrée d'horloge H est reliée au circuit d'horloge CL et dont l'entrée de signal IN est reliée à la sortie de la porte P3. Quand l'entrée IN est au niveau bas, le compteur CT1 est bloqué sur le compte "8". La sortie Cy, correspondant à la sortie de compte 127, est encore reliée à la seconde entrée de la porte P2 dont la sortie est reliée à une entrée d'une porte OU à deux entrées P5.

Le compteur CT'1 est un compteur binaire à sept bits dont l'entrée d'horloge H est reliée au circuit d'horloge CL et dont l'entrée de signal IN' est reliée à la sortie de la porte P'3. Quand l'entrée IN' est au niveau bas, le compteur CT'1 est bloqué sur le compte "8". La sortie Cy', correspondant à la sortie de compte 127, est encore reliée à la seconde entrée de la porte P'2 dont la sortie est reliée à la seconde entrée de la porte OU P5.

La sortie de la porte P5 est reliée, d'une part, à l'entrée d'un compteur CT2 et, d'autre part, à l'entrée d'un circuit multiplexeur M1. Le compteur CT2 est un compteur binaire à sept bits dont l'entrée d'horloge est reliée au circuit d'horloge CL. Quand la sortie de la porte P5 passe au niveau haut, le compteur CT2 est réinitialisé à zéro.

Le circuit multiplexeur M1 a une entrée reliée à la sortie Cy et une entrée reliée à la sortie Q d'une bascule FF. L'entrée d'horloge de la bascule FF est reliée au circuit d'horloge CL et son entrée D à la sortie du multiplexeur M1.

Le fonctionnement des circuits RE, COMPT, P1 à P4, DBL et CT1 est entièrement décrit dans le document EP-A-O 108 028 en relation avec la Fig. 3 de ce document. On retiendra que, quand un intervalle de temps non occupé est reconnu avec une étiquette CAD1, le comparateur COMPT la reconnaît, que son signal de sortie est mis en mémoire dans la bascule DBL, que la porte OU-exclusif P1 détecte la suite alternée de "1" et "0" et qu'avec le compteur CT1, la sortie de la porte ET P2 passe à l'état haut pendant le 127e temps élémentaire de l'intervalle. Le signal Syn indique donc la reconnaissance d'un intervalle non occupé du canal d'entrée E1.

En ce qui concerne le fonctionnement des circuits RE', COMPT', P'1 à P'4, DBL' et CT'1, il est également identique à celui qui est décrit dans le document EP-A-O 108 028. On retiendra que, quand un intervalle de temps non occupé est reconnu avec une étiquette CAD2, le comparateur COMPT' la reconnaît, que son signal de sortie est mis en mémoire dans la bascule DBL', que la porte OU-exclusif P'1 détecte la suite alternée de "11" et "00" et qu'avec le compteur CT'1, la sortie de la porte ET P'2 passe à l'état haut pendant le 127e temps élémentaire de cet intervalle. Le signal de Syn' indique donc la reconnaissance d'un intervalle de temps inoccupé de l'un des canaux E2 à En.

Ainsi la sortie, à l'état haut, de la porte P5 initialise le compteur cyclique CT2, lequel sert à maintenir le synchronisme des intervalles de temps entre deux intervalles de temps non occupés. Par ailleurs, la sortie de la porte P5 commande le multiplexeur M1 pour qu'il laisse passer le signal Cy de sortie du compteur CT1. Si celui-ci est à l'état haut, la bascule FF recopie un état "1" qui sera ensuite appliqué à l'autre entrée du multiplexeur M1 quand la sortie de la porte P5 repassera à l'état bas. C'est le cas de la reconnaissance d'un intervalle non occupé du canal E1. Dans le cas contraire, la bascule FF recopie un état "0". La sortie Q de la bascule FF constitue la sortie du détecteur Dj.

Il apparaît donc que, dans le circuit de réarrangement REARRGMT de la Fig. 3, à chaque intervalle de temps non occupé reconnu dans un détecteur Dj, un signal "1" ou "0" est envoyé au codeur COD. Si un signal "0" est émis par l'un des circuits D2 à Dn ou si un "1" est émis par le circuit D1, la sortie du codeur COD reste inactive. Si un signal "1" est émis par un détecteur Dj, avec $j$ différent de 1, la valeur décimale de $j$ est convertie dans le circuit COD qui transmet le nombre binaire $(n + 1 - j)$ à l'entrée de chargement du compteur CEXP.

En effet, le compteur déborde après avoir atteint la valeur décimale $\underline{n}$, où $\underline{n}$ représente le nombre de canaux d'entrée et de canaux de sortie. Quand le détecteur de cadrage Dj associé au $j$e canal de sortie transmet un "1" au codeur COD, cela signifie que le train entrant sort sur le 1er canal sort sur le $j$e canal.

Au top d'horloge qui va faire déborder le compteur CEXP, l'information présente à l'entrée du démultiplexeur DEMUX est celle qui est reçue du canal d'entrée $(n + 2 - j)$. Pour que cette information soit correctement routée vers le $(n + 2 - j)$e canal de sortie, il est nécessaire que le nombre binaire affiché à l'entrée du compteur CEXP soit $(n + 1 - j)$. Au débordement, la sortie C du compteur CEXP active son entrée L, ce qui entraîne le chargement de ce nombre dans le compteur. Le synchronisme est donc rétabli.

Bien entendu, une fois le synchronisme établi, celui-ci se conserve tant qu'il n'y a pas de perturbations de la liaison entre le multiplexeur MUX et le démultiplexeur DEMUX. En pratique, la mise en synchronisme a surtout besoin d'être effectuée à chaque démarrage de la liaison.

**Revendications**

1. Système d'assemblage et de sérialisation temporels bit à bit en un multiplex d'ordre supérieur et vice-versa de multiplex de paquets d'ordre inférieur découpés en intervalles de temps égaux et récurrents dans lesquels l'information à transmettre est découpée en paquets, chaque paquet occupant un intervalle de temps, chaque intervalle de temps non occupé par un paquet comportant un signal de synchronisation, avec, parmi les multiplex d'ordre inférieur (E1 à En) à assembler, l'un d'eux transmettant un signal de synchronisation d'un premier type (CAD1) tandis que les autres transmettent chacun un signal de synchronisation d'un second type (CAD2), caractérisé en ce que les canaux d'entrée transmettant les multiplex d'ordre inférieur (E1 à En) sont reliés aux entrées correspondantes d'un multiplexeur temporel bit par bit (MUX) dont la sortie est reliée à un démultiplexeur temporel bit par bit (DEMUX) dont les sorties sont reliées à des canaux de sortie correspondants (S1 à Sn), chaque canal de sortie (Sj) étant relié en parallèle à l'entrée d'un détecteur de signaux de synchronisation (Dj) capable d'identifier le signal de synchronisation du premier type (CAD1) et le signal de synchronisation du second type (CAD2) et de les distinguer l'une de l'autre, les sorties des détecteurs (D1 à Dn) étant reliées aux entrées correspondantes d'un codeur (COD) d'identité de détecteur transmettant une reconnaissance d'un signal de synchronisation du premier type (CAD1), la sortie du codeur (COD) étant reliée à un compteur (CEXP) d'exploration du démultiplexeur (DEMUX) pour décaler l'exploration du démultiplexeur (DEMUX) en fonction de l'identité d'un détecteur (Dj) ayant fourni la reconnaissance d'un signal de synchronisation du premier type (CAD1).

2. Système suivant la revendication 1 dans lequel les signaux de synchronisation de premier et de second types comportent huit bits, le reste de l'intervalle de temps étant composé d'une suite alternée de "0" et de "1", caractérisé en ce que chaque détecteur de signaux de synchronisation (Dj) comprend un registre à décalage (RE) à huit étages dont l'entrée série est reliée au canal de sortie correspondant (Sj) et dont les huit sorties parallèles sont reliées, d'une part, aux premières entrées parallèles d'un premier comparateur COMPT et, d'autre part, aux huit premières entrées parallèles d'un second comparateur (COMPT'), aux secondes entrées du premier comparateur COMPT étant appliqués des potentiels correspondant au premier signal de synchronisation (CAD1) et aux secondes entrées du second comparateur (COMPT') étant appliqués des potentiels correspondant au second signal de synchronisation (CAD2), les deux premières sorties parallèles du registre (RE) et les première et troisième sorties du registre (RE) étant encore respectivement reliées aux deux entrées de deux portes OU-exclusif (P1, P'1), les sorties du premier comparateur (COMPT) et du second comparateur (COMPT') étant respectivement reliées aux premières entrées de deux premières portes OU (P4, P'4) dont les sorties sont respectivement reliées aux entrées de signal de première et seconde bascules (DBL, DBL') dont les sorties Q sont respectivement reliées aux premières entrées de deux portes ET (P3, P'3) dont les sorties sont respectivement reliées aux secondes entrées des premières portes OU (P4, P'4), d'une part, et aux entrées de signal de premier et second compteurs binaires cycliques (CT1, CT'1), d'autre part, les secondes entrées des premières portes ET (P3, P'3) étant reliées aux sorties des portes OU-exclusif (P1, P'1) qui sont également respectivement reliées aux premières entrées de deux portes ET (P2, P'2), les sorties de débordement (Cy, Cy') des premier et second compteurs (CT1, CT'1) étant respectivement reliées, d'une part, aux entrées de remise à zéro des première et seconde bascules (DBL et DBL') et, d'autre part, aux secondes entrées des secondes portes ET (P2, P'2) dont les sorties sont respectivement reliées aux entrées d'une seconde porte OU (P5) dont la sortie est reliée à l'entrée d'initialisation d'un troisième compteur cyclique (CT2) dont la durée de cycle est égale à celle d'un intervalle de temps, la sortie de la troisième porte OU (P5) étant encore reliée à l'entrée de commande d'un circuit multiplexeur (M1) dont les deux entrées sont respectivement reliées à la sortie de débordement (Cy) du premier compteur (CT1) et à la sortie Q d'une troisième bascule (FF), la sortie du circuit multiplexeur (M1) étant reliée à l'entrée de signal de la troisième bascule (FF), la sortie Q de la troisième bascule (FF) étant reliée à l'entrée correspondante du codeur (COD), les entrées d'horloge du registre (RE) des bascules (DBL, DBL', FF) et des compteurs (CT1, CT'1, CT2) étant reliées à la sortie d'une horloge bit (CL).

**Claims**

1. A bit by bit time assembling and serialization system in a multiplex of high order and vice-versa of multiplex of packets of low cut into equal and recurrent intervals of time in which the information to be transmitted is cut into packets each packet occupying an interval of time, each interval of time not occupied by a packet comprising a synchronization signal with, among the multiplexes of low order (E1 to En) to be assembled, one of them transmitting a synchronization signal of a first type (CAD1) whilst the others each transmit a synchronization signal of a second type (CAD2), characterised in that the input channels transmitting the multiplexes of low order (E1 to En) are connected to the corresponding inputs of a bit by bit time multiplexer (MUX) the output of which is connected to a bit by bit time demultiplexer (DEMUX) the outputs of which are connected to corresponding output channels (S1 to Sn), each output channel (Sj) being connected in parallel to the input of a detector of synchronization signals (Dj) capable of identifying the synchronization signal of the first type (CAD1) and the synchronization signal of the second type (CAD2) and distinguishing them from one another, the outputs of the detectors (D1 to Dn) being connected to the corresponding inputs of an identity detector coder (COD) transmitting a recognition of a synchronization signal of the first type (CAD1), the output of the coder (COD) being connected to a scanning counter (CEXP) of the demultiplexer (DEMUX) to shift the scanning of the demultiplexer (DEMUX) as a function of the identity of a detector (Dj) having supplied the recognition of a synchronization signal of the first type (CAD1).

2. A system according to claim 1 in which the synchronization signals of first and second type comprise eight bits, the remainder of the interval of time being composed of an alternating series of "0" and "1", characterised in that each detector of synchronization signals (Dj) comprises a shift register (RE) with eight stages the input series of which is connected to the corresponding output channel (Sj) and the eight parallel outputs of which are connected, on the one hand, to the first parallel inputs of a first comparator COMPT and on the other hand, to the eight parallel first inputs of a second comparator (COMPT') to the second inputs of the first comparator COMPT being applied potentials corresponding to the first synchronization signal (CAD1) and to the second inputs of the second comparator (COMPT') being applied potentials corresponding to the second synchronization signal (CAD2) the first two parallel outputs of the register (RE) and the first and third outputs of the register (RE) being furthermore respectively connected to the two inputs of two exclusive OR gates (P1, P'1), the outputs of the first comparator (COMPT) and of the second comparator (COMPT') being respectively connected to the first inputs of two first OR gates (P4, P'4) the outputs of which are respectively connected to the signal inputs of first and second flip-flops (DBL, DBL') the outputs Q of which are respectively connected to the first inputs of two AND gates (P3, P'3) the outputs of which are respectively connected to the second inputs of the first OR gates (P4, P'4) on the one hand and to the signal inputs of first and second cyclic binary counters (CT1, CT'1), on the other hand, the second inputs of the first AND gates (P3, P'3) being connected to the outputs of the exclusive OR gates (P1, P'1) which are likewise respectively connected to the first inputs of two AND gates (P2, P'2), the overflow outputs (Cy, Cy') of the first and second counters (CT1, CT'1) being respectively connected on the one hand to the setting to zero inputs of the first and second flip-flops (DBL and DBL') and on the other hand to the second inputs of the second AND gates (P2, P'2) the outputs of which are respectively connected to the inputs of a second OR gate (P5) the output of which is connected to the initialization input of a third cyclic counter (CT2) the cycle duration of which is equal to that of one interval of time, the output of the third OR gate (P5) being moreover connected to the control input of a multiplexer circuit (M1) the two inputs of which are respectively connected to the overflow output (Cy) of the first counter (CT1) and to the output Q of a third flip-flop (FF), the output of the multiplexer circuit (M1) being connected to the signal input of the third flip-flop (FF), the output Q of the third flip-flop (FF) being connected to the corresponding input of the coder (COD), the clock inputs of the register (RE) of the flip-flops (DBL, DBL', FF) and of the counters (CT1, CT'1, CT2) being connected to the output of a bit clock (CL).

**Patentansprüche**

1. System zur zeitlichen Zusammensetzung und Bit-Serienbildung eines Multiplex höherer Ordnung und umgekehrt eines Paketmultiplex niedrigerer Ordnung, die in gleiche und sich wiederholende Zeitintervalle unterteilt sind, in welchen die zu übertragende Information in Pakete unterteilt ist, und wobei jedes Paket ein Zeitintervall einnimmt, wobei jedes nicht von einem Paket eingenommene Zeitintervall ein Synchronisationssignal enthält, wobei einer der zusammenzusetzenden Multiplexe (E1 bis En) niedrigerer Ordnung ein Synchronisationssignal eines ersten Typs (CAD1) überträgt, während die anderen jeweils ein Synchronisationssignal eines zweiten Typs (CAD2) übertragen, dadurch gekennzeichnet, daß die Eingangskanäle, die die Multiplexe (E1 bis En) niedrigerer Ordnung übertragen, mit den entsprechenden Eingängen eines zeitlich bitseriellen Multiplexers (MUX) verbunden sind, dessen Ausgang mit einem zeitlich bitseriellen Demultiplexer (DEMUX) verbunden ist, dessen Ausgänge mit entsprechenden Ausgangskanälen (S1 bis Sn) verbunden sind, wobei jeder Ausgangskanal (Sj) parallel mit dem Eingang eines Synchronisationssignal-Detektors (Dj) verbunden ist, der in der Lage ist, das Synchronisationssignal des ersten Typs (CAD1) sowie das Synchronisationssignal des zweiten Typs (CAD2) zu identifizieren und eines vom anderen zu unterscheiden, und wobei die Ausgänge der Detektoren (D1 bis Dn) mit den entsprechenden Eingängen eines Detektor-Identitäts-Kodierers (COD) verbunden sind, der ein Erkennen eines Synchronisationssignals des ersten Typs (CAD1) überträgt, wobei der Ausgang des Kodierers (COD) mit einem Abtastzähler (CEXP) des Demultiplexers (DEMUX) zum Verschieben der Abtastung des Demultiplexers (DEMUX) als Funktion der Identität eines Detektors (Dj), der die Erkennung eines Synchronisationssignals des ersten Typs (CAD1) geliefert hat, verbunden ist.

2. System nach Anspruch 1, in welchem die Synchronisationssignale des ersten und zweiten Typs acht Bits enthalten, wobei der Rest des Zeitintervalls aus einer abwechselnden Folge von "0" und "1" zusammengesetzt ist, dadurch gekennzeichnet, daß jeder Synchronisationssignal-Detektor (Dj) ein achtstufiges Schieberegister (RE) umfaßt, dessen Serieneingang mit dem entsprechenden Ausgangskanal (Sj) verbunden ist und dessen acht parallele Ausgänge einerseits mit den ersten parallelen Eingängen eines ersten Komparators (COMPT) und andererseits mit den acht ersten parallelen Eingängen eines zweiten Komparators (COMPT') verbunden sind, wobei an die zweiten Eingänge des ersten Komparators (COMPT) dem ersten Synchronisationssignal (CAD1) entsprechende Spannungen und an die zweiten Eingänge des zweiten Komparators (COMPT') dem zweiten Synchronisationssignal (CAD2) entsprechende Spannungen angelegt sind, wobei die beiden ersten parallelen Ausgänge des Registers (RE) und die ersten und dritten Ausgänge des Registers (RE) noch entsprechend mit den zwei Eingängen zweier Exklusiv-ODER-Tore (P1, P'2) verbunden sind, wobei die Ausgänge des ersten Komparators (COMPT) und des zweiten Komparators (COMPT') entsprechend mit den ersten Eingängen zweier erster ODER-Tore (P4, P'4) verbunden sind, deren Ausgänge entsprechend mit den Signaleingängen des ersten und zweiten Flip-Flops (DBL, DBL') verbunden sind, dessen Ausgänge Q entsprechend mit den ersten Eingängen zweier UND-Tore (P3, P'3) verbunden sind, deren Ausgänge entsprechend mit den zweiten Eingängen der ersten ODER-Tore (P4, P'4) einerseits und den Signaleingängen erster und zweiter zyklischer Binärzähler (CT1, CT'1) andererseits verbunden sind, wobei die zweiten Eingänge der ersten UND-Tore (P3, P'3) mit den Ausgängen der Exklusiv-ODER-Tore (P1, P'1) verbunden sind, die ebenfalls entsprechend mit den ersten Eingängen zweier UND-Tore (P2, P'2) verbunden sind, wobei die Überlauf-Ausgänge (Cy, C'y) des ersten und zweiten Zählers (CT1, CT'1) entsprechend einerseits mit den Rückstelleingängen des ersten und zweiten Flip-Flops (DBL und DBL') und andererseits mit den zweiten Eingängen der zweiten UND-Tore (P2, P'2) verbunden sind, deren Ausgänge entsprechend mit den Eingängen eines zweiten ODER-Tores (P5) verbunden sind, dessen Ausgang mit dem Initialisierungs-Eingang eines dritten zyklischen Zählers (CT2) verbunden ist, dessen Zyklusdauer gleich derjenigen eines Zeitintervalls ist, wobei der Ausgang des dritten ODER-Tores (P5) noch mit dem Steuereingang einer Multiplex-Schaltung (M1) verbunden ist, deren beide Eingänge entsprechend mit dem Überlauf-Ausgang (Cy) des ersten Zählers (CT1) und dem Ausgang Q eines dritten Flip-Flops (FF) verbunden sind, wobei der Ausgang der Multiplex-Schaltung (M1) mit dem Signaleingang des dritten Flip-Flops (FF) verbunden ist, und wobei der Ausgang Q des dritten Flip-Flops mit dem entsprechenden Eingang des Kodierers (COD) verbunden ist, wobei die Takteingänge des Registers (RE) der Flip-Flops (DBL, DBL', FF) und der Zähler (CT1, CT'1, CT2) mit dem Ausgang eines Bit-Taktgebers (CL) verbunden sind.

# FIG.1

EP 0 216 720 B1

FIG. 2

# FIG.3

FIG. 4

EP 0 216 720 B1